# EUROPÄISCHE PATENTSCHRIFT

(11) **EP 0 732 046 B1**
(45) Veröffentlichungstag und Bekanntmachung des Hinweises auf die Patenterteilung: **19.05.1999**
(21) Anmeldenummer: 96101459.4
(22) Anmeldetag: 02.02.1996
(51) Int. Cl.: A01D 41/12, A01B 69/04

(54) **Ortungsvorrichtung**
Orientation device
Dispositif d'orientation

(30) Priorität: 13.03.1995 DE 19508941
(43) Veröffentlichungstag der Anmeldung: 18.09.1996
(73) Patentinhaber: CLAAS KGaA, 33428 Harsewinkel (DE)
(72) Erfinder: Diekhans, Norbert, Dr., D-33335 Gütersloh (DE); Autermann, Ludger, D-48317 Drensteinfurt (DE); Hagedorn, Stefan, D-48231 Warendorf (DE); Homburg, Helmut, D-33428 Harsewinkel (DE)

(56) Entgegenhaltungen:
- EP-A- 0 375 301
- EP-A- 0 381 073
- DE-A- 2 109 744
- DE-A- 2 451 314
- DE-A- 2 455 836
- DE-A- 4 220 913
- FR-A- 2 152 913
- FR-A- 2 184 856
- FR-A- 2 254 265
- FR-A- 2 401 053
- GB-A- 2 057 726
- US-A- 2 751 030
- US-A- 4 482 960
- TRANSACTIONS OF THE ASAE, Bd. 19, Nr. 4, 7.August 1976, Seiten 639-642, XP002005467 KIRK: "SWATHER EDGE GUIDE STEERING CONTROL SYSTEM"

## Beschreibung

Die Erfindung betrifft eine Ortungsvorrichtung, insbesondere eine Erntegutkanten-Ortungsvorrichtung, deren Ortungssignale einer Regelvorrichtung zugeführt sind, die mindestens ein Lenkhydraulikstellsignal an eine elektrisch gesteuerte Lenkhydraulik von lenkbaren Rädern einer Landmaschine derart abgibt, daß eine jeweilige Ortungssignalabweichung von einem vorgegebenen Ortungskriterium, insbes. eines vorgegebenen Seitenabstandes einer Erntegutkante zu einer Mähwerkkante, minimiert wird.

Eine derartige Vorrichtung ist aus der DE-A-21 09 744 bekannt. Diese besteht aus einem Strahler, der nahe den Messern am Mähwerk und nahe der Erntegutkante im Getreidefeld angeordnet ist, mit beidseitig dazu angeordneten Photozellen, deren Sensorsignale zugehörige Steuerrelais betätigen, deren inverswirkenden Steuerkontakte auf die rechts- bzw. linkssteuernden Lenkhydraulikventile der Hinterräder der Erntemaschine arbeiten. Diese Vorrichtung hat den Nachteil, daß die Dichte des Erntegutes in die Regelgenauigkeit unmittelbar eingeht, indem dichteabhängig ein scheinbarer Seitenversatz des Mähwerkes zur Erntegutkante signalisiert wird. Außerdem wird eine Abweichung der Fahrtrichtung vom Erntegutkantenverlauf nicht erkannt, was das Regelverhalten träge gestaltet.

Weiterhin ist aus der DE-C-24 55 836 eine Ortungsvorrichtung an einer Erntemaschine bekannt, die einen Sender und einen Empfänger aufweist, die vom Mähwerk nach vorn und in einem spitzen Winkel seitlich auf das stehende Getreide gerichtet sind, und deren Empfängersignalamplitude im Vergleich zu einem vorgegebenen Sollwert für eine Lenkungsregelung ausgewertet wird. Zur Verringerung von Störeinflüssen wurden schmalbandige Lichtstrahler, Polarisatoren und Modulatoren oder kurzwellige stark gebündelte elektromagnetische Wellen und eine periodische horizontale Schwenkung sowie entsprechende Signalauswertemittel genutzt. Auch hierbei bestand der Nachteil, daß schwankende Eigenschaften, insbesondere eine wechselnde Dichte, des stehenden Getreides die Lenkung stark beeinflussen und das Fahrzeug dadurch in einen schwachen oder liegenden Bestand hineingelenkt wird.

Es ist Aufgabe der Erfindung, eine Ortungsvorrichtung zu offenbaren, die eine weitgehend von der Getreidedichte unabhängige Erfassung der Erntegutkante erbringt und eine genauere Lenkungsregelung ermöglicht.

Die Lösung besteht darin, daß an der Landmaschine, insbes. einem Mähdrescher, drei Teilortungsvorrichtungen angeordnet sind, von denen eine erste auf das abgeerntete Feld, insbes. Stoppelfeld, eine zweite auf das nicht abgeerntete Feld, insbes. Getreidefeld, und eine dritte auf die Erntegutkante gerichtet sind, und jeweils der Betrag der Differenz der Teilortungssignale der ersten und zweiten Teilortungsvorrichtungen normierend eine Bereichsgröße festlegen und jeweils der Mittelwert der beiden genannten Teilortungssignale die Nullpunktlage für das Teilortungssignal der dritten Teilortungsvorrichtung ergibt und dieses so normiert als ein Ist-Signal der Regelvorrichtung dient.

Es hat sich für einen Mähdrescher als günstig erwiesen, drei Teilortungsvorrichtungen so anzuordnen, daß eine das Stoppelfeld, eine zweite das Getreidefeld und eine dritte die Getreidekante anvisiert, wobei die Signale der ersten und der zweiten Teilortungsvorrichtungen jeweils den Normierungsbereich begrenzen und das dazwischenliegende Signal des dritten Teilortungssensors auf diesen Bereich bezogen, normiert als das Ortungssignal weiter verarbeitet wird. Es lassen sich auf diese Weise sowohl optische, insbesondere infrarote oder monochrome, als auch akkustische, insbesondere reflektierte, Sensorsignale auswerten.

Vorteilhaft liegen die ortungsmäßig erfaßten Bereiche des Stoppelfeldes und des Getreidefeldes jeweils so weit vor der Erntemaschine, daß das aus den drei einzelnen Signalen erzeugte genormte Ortungssignal vermöge der Kompensationseffekte nur eine geringe Abhängigkeit von dem Durchfahren von Bodenunebenheiten, insbesondere Bodenwellen, und von Neigungs- und Kippbewegungen der Landmaschine oder des Schneidwerkvorsatzes aufweist.

Die Ortungsvorrichtung, welche die Getreidekante abtastet, ist vorteilhaft so eingerichtet, daß sie einen Bereich erfaßt, der mehrere Meter vor dem Schneidwerk der Erntemaschine liegt, da diese andererseits an ihren rückwärtsgelegenen Rädern gelenkt wird und deshalb eine Abweichung vom vorgesehenen Fahrweg nur nach einem größeren zurückgelegten Fahrweg ausgeglichen werden kann.

Bei dieser Anordnung hat es sich als günstig erwiesen, das Ist-Signal des Radstellwinkels als weitere Eingangsgröße in die Regelvorrichtung einzuführen, so daß praktisch vorausschauend aus diesem Signal der spätere Weg der Erntemaschine berücksichtigt wird. Hierzu hat es sich als vorteilhaft erwiesen, ein zweidimensionales Kennlinienfeld zu erstellen, dessen Eingangsgrößen in digitalisierter Form das normierte Ortungssignal und das Radstellwinkelsignal sind und dessen Inhalte jeweils eine dazu passende Lenksteuergröße bilden. Dieses Kennlinienfeld kann ferner nach und nach in seinen Eintragungen für eine optimale Lenkung optimiert werden und leicht besonderen Verhältnissen angepaßt werden.

Es hat sich gezeigt, daß bei herkömmlichen Mähdreschern etwa 60% der Aufmerksamkeit des Fahrers für das Lenken der Maschine beansprucht wurde. Die Lenktätigkeit ist deshalb besonders anstrengend, da das Lenken mit den Hinterrändern eine relativ lange Vorhaltezeit benötigt, bis eine seitliche Lageänderung des Mähdreschers zur Getreidekante auftritt, und danach muß durch ein entsprechendes Gegensteuern wieder die Geradeausfahrt herbeiführt werden. Das automatische Lenken ermöglicht bei praktisch völliger diesbezüglicher Entlastung des Fahrers im allgemeinen ein schnelleres Fahren und eine annähernd vollständige Auslastung der Schneidwerksbreite bis auf einen Sicherheitsrestabstand von ca. 10 cm.

Die Teilortungsvorrichtungen sind bevorzugt Infrarotsensoren, es lassen sich jedoch auch Ultraschallsender-Empfängeranordnungen oder Leuchtfleckensender-Empfängeranordnungen verwenden. Die Ortungssensoren weisen jeweils Fokussierungsmittel auf, die einen Raumwinkel erfassen, der eine Halbwertsbreite von 6° und eine 90% Erfassungsweite von 12° hat. Es hat sich vorteilhaft erwiesen, die Teilortungssensoren über der seitlichen Kante des Schneidwerks in etwa 1,5 m Höhe über dem Boden anzuordnen. Der erste Teilortungssensor ist etwa in seinem Sensorfeldbereich 1,5 m neben der Erntegutkante zenriert auf das Stoppelfeld ausgerichtet, und der zweite Teilortungssensor ist entsprechend etwa 1,5 m neben der Erntegutkante zentriert auf das Getreide gerichtet. Der Raumwinkel ergibt im Auftreffgebiet einen erfaßten Bereich von etwa 1 m Durchmesser, und die erfaßten Raumwinkelbereiche sind gegeneinander etwa um den halben Durchmesser derselben voneinander beabstandet.

Bei der Verwendung von Infrarotsensoren hatte es sich als vorteilhaft erwiesen, einen Wellenlängenbereich zwischen 8 und 14 Mikrometern durch Filter ausgeblendet auszuwerten. Es haben sich Infrarotsensoren bewährt, die aus kaskadierten planaren Dünnschicht-Thermoelementen bestehen, die im Abbildungsbereich einer Infrarotlinse angeordnet sind. Die Dünnfilmkontaktanordnungen sind vorteilhaft sektorartig ausgebildet und jeweils auf der einen Kontaktstelle geschwärzt und auf der anderen reflektierend, vor Strahlung geschützt, ausgebildet.

Langwierige Versuche haben gezeigt, daß der Temperaturunterschied zwischen dem abgeernteten Bereich und dem Getreidefeld zwischen 10° C und 1° C liegt, wobei in Sonderfällen das Getreide auch etwas wärmer als der Boden war. Die absolute Temperatur lag je nach Bodenart dabei zwischen 45° C und 20° C. Nur die Auswertung der Differenztemperatur führt zu einer sinnvollen Bewertung der Signale des dritten Sensors. Durch die Absolutwertbildung der Differenz und eine feste Zuordnung der beiden Bezugssensorsignale zum oberen bzw. unteren Bereichswert werden unabhängig davon, ob das Getreide oder die Stoppeln die höhere Temperatur haben, die Lenksignale für die Regelung richtig gerichtet erzeugt. Bei einem sehr selten auftretenden zu geringen Temperaturunterschied wird jeweils geradeaus gelenkt und eine entsprechende Meldung an den Fahrer gegeben. Die Bodentemperatur ist in wenigen Minuten nach dem Erntevorgang stabil erreicht, so daß bei einem weiteren Vorbeifahren des Mähdreschers die Differenztemperatur zwichen dem Getreide und dem Boden vorliegt.

Bem Eisatz von Leuchtfleckensensoren hat es sich als vorteilhaft erwiesen, Licht einer Wellenlänge zu verwenden, daß einen hohen Kontrast zwischen dem damit beleuchteten Getreidefeld, daß im wesentlichen gelb ist, und dem im wesentlichen braunen Stoppelfeld erbringt. Dementsprechend sind die Empfänger mit geeigneten Filtern versehen, damit der Einfluß des Umgebungslichtes möglichst gering ist. Als Beleuchtungsmittel hat sich eine Natriumdampflampe bewährt. Außerdem ist es vorteilhaft, das Licht des Strahlers in der Intensität zu modulieren und empfangsseitig ein Filter entsprechender Fequenz in die elektrische Signalverarbeitung einzusetzen.

Anhand der Figuren 1 bis 3 sind vorteilhafte Ausgestaltungen dargestellt.
- Fig. 1: zeigt ein Übersichtsbild eines Mähdreschers mit einer Lenkregelvorrichtung;
- Fig. 2: zeigt einen Getreidekantenabtaster mit den Bezugsortungsvorrichtungen;
- Fig. 3: zeigt eine Seitenansicht zu Fig. 2 entlang der Erntegutkante.

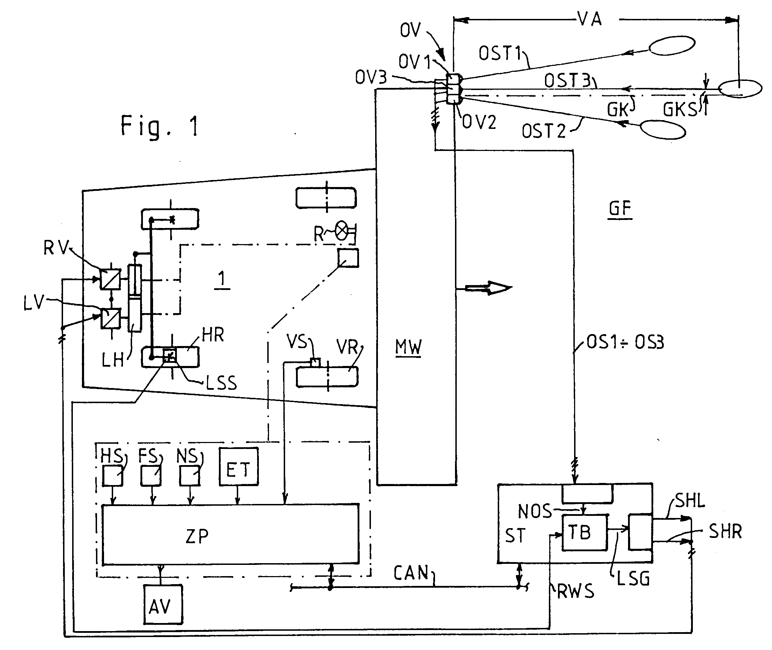

Figur 1 zeigt einen Mähdrescher (1) mit einem Mähwerk (MW), welcher an einer Getreidekante (GK) eines Getreidefeldes (GF) unter Einhaltung einer möglichst geringen Abweichung von einer vorgegebenen Getreidekantenseitenlage (GKS) automatisch geregelt entlangfahren soll. Etwa 1,5 m oberhalb des Mähwerkes (MW) ist eine Ortungsvorrichtung (OV) angeordnet, welche aus drei Teilortungsvorrichtung (OV1, OV2, OV3) besteht, deren Ortungsstrahlenbereiche (OST1 - OST3) auf das Stoppelfeld, das Getreidefeld (GF) und die Getreidekante (GK) orientiert sind, und deren Ortungssignale (OS1 - OS3) einer Regelvorrichtung (ST) zugeführt sind. Diese Ortungssignale werden zweckmäßig digitalisiert und in ein genormtes Ortungssignal (NOS) umgesetzt. Hierbei wird die Differenz zwischen den beiden Ortungssignalen (OS1, OS2) der beiden äußeren Ortungsstrahlenbereiche (OST1, OST2) gebildet und dem genormten Bereich zugeordnet. Weiterhin wird der Mittelwert aus diesen beiden Referenzortungssignalen (OS1, OS2) gebildet, der als Bezugswert für das Ortungssignal (OS3) des dritten Ortungsstrahlenbereichs (OST3) dient, der auf die Getreidekante (GK) gerichtet ist.

Im vorgegebenen Beispiel ist die Regelvorrichtung (ST) über einen genormten Datenbus (CAN) mit einem Zentralprozessor (ZP) verbunden, über den auch die übrigen Steuerprozesse des Mähdreschers überwacht werden. Hierzu sind an dem Zentralprozessor (ZP) eine Eingabetastatur (ET) und eine Ausgabevorrichtung (AV) vorgesehen. Weiterhin nimmt der Zentralprozessor (ZP) von den Vorderrändern (VR) ein Geschwindigkeitssignal (VS) auf. Von der Regelvorrichtung (ST) wird die Lenkhydraulik (LH) mittels eines Linkssteuerventiles (LV) und eines Rechtssteuerventils (RV) angesteuert, deren hydraulischen Ausgänge die vorhandene Lenkhydraulik (LH) beaufschlagen, die den Einschlag der Hinterrädern (HR) bewirkt. An der Lenkvorrichtung wird ein Radstellwinkelsignal (RWS) abgenommen und der Regelvorrichtung (ST) zugeführt. Die Lenkstellventile (LV, RV) sind federbelastet selbstsicher ausgeführt, so daß sie bei stromausfall geschlossen sind. In diesem Zustand wird die Lenkung unmittelbar über die bekannte hydraulische Steuerung vom Lenkrad (R) aus vorgenommen. In der Bedienerkabine sind außerdem ein Handschalter (HS), ein Fußschalter (FS) und ein Sicherheitsschalter (NS) angeordnet, deren Signale der Lenkstellventilanordnung aus Sicherheitsgründen zugeführt sind und der Regelvorrichtung (ST) zu deren Aktivierung bei Vollständigkeit dieser Signale zugänglich gemacht sind.

Es läßt sich erkennen, daß der vorausabstand (VA) mit dem der Ortungstrahlenbereich (OST3) die Getreidekante (GK) abtastet, in etwa dem Abstand der Vorderräder (VR) von den Hinterrädern (HR) entspricht. Auf diese Weise ergibt eine Winkelabweichung der Mähdrescherachse zur Getreidekante, die sich in dem Ortungssignal als Teilkomponente darstellt, ein Äquivalent zu dem Radstellwinkelsignal. Diese jeweilige Winkelkomponente des Ortungssignalbereichs überlagert jeweils die Komponente der Seitenabweichung der Richtungsachse des Mähdreschers von dem vorgegebenen Sollweg, d.h. die Komponente, die die Getreidekanten seitenlage (GKS) jeweils erbringt.

Die Ortungsvorrichtung (OV) speist vorzugsweise ihr normiertes Ortungssignal (NOS) bereits digitalisiert in die Regelvorrichtung (ST) ein. Die anderen Sensoren welche die übrigen Eingangsgrößen erzeugen, liegen im allgemeinen in dem Mähdrescher verteilt und geben ihre Signale über zugehörige Digitalisierer und Rechner weiter. Selbstverständlich können auch deren Normierer jeweils zugehörig unmittelbar dort im Sensorbereich installiert sein.

An den gelenkten Hinterrädern (HR) befindet sich ein Lenkradstellungssensor (LSS), dessen Radwinkelsignal (RWS) in geeigneter Weise als Eingangssignal benutzt wird. Hierbei hat sich als günstig erwiesen, das normierte Ortungssignal (NOS) und das Radstellwinkelsignal (RWS) einer zweidimensionalen Tabelle (TB) addressierend zuzuführen, die ein zweidimensionales Kennwertefeld enthält, welches geeignete Lenkstellgrößen (LSG) enthält. Diese Lenkstellgröße (LSG) wird jeweils in ein linkes bzw. rechtes Hydraulikstellsignal (SHL, SHR) umgesetzt und dem Links- bzw. Rechtssteuerventil (LV, RV) zugeführt.

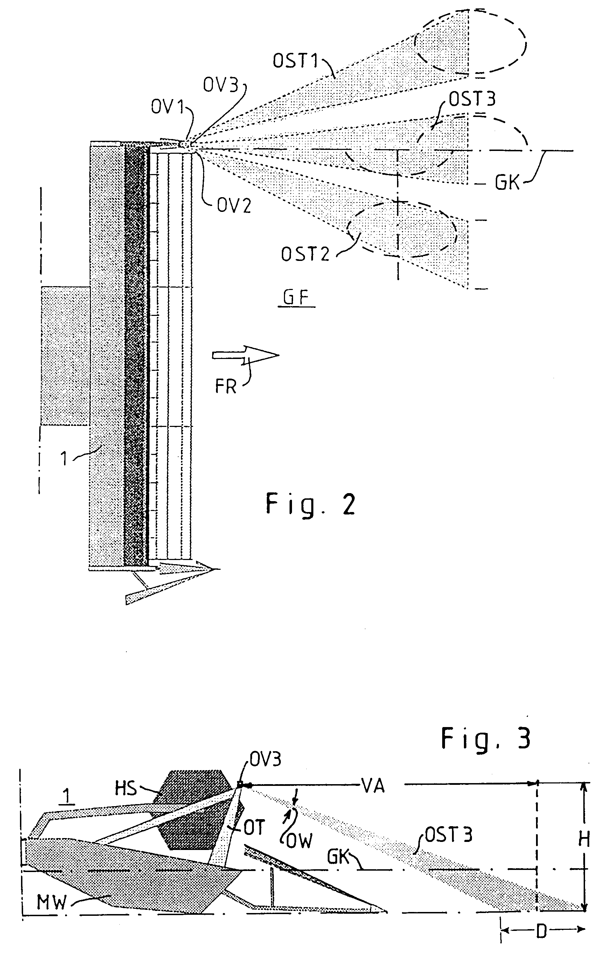

Figur 2 zeigt die Ortungsvorrichtung im Ausschnitt in Aufsicht, die sich insbesondere bei Ultraschall- und Infrarotortung bewährt hat. Hierbei ist an dem Mähdrescher (1) am Schneidwerk nahe der Getreidekante (GK) eine Ortungsvorrichtung mit drei Teilvorrichtungen vorgesehen, von denen die erste Ortungsteilvorrichtung (OV1) das bereits abgeerntete Stoppelfeld erfaßt, die zweite Ortungsteilvorrichtung (OV2) in das Getreidefeld (GF) gerichtet ist und die dritte Ortungsteilvorrichtung (OV3) die Getreidekante (GK) erfaßt. Die drei Teilortungsvorrichtungen lassen sich auch, insbesondere bei optischer Ortung, mittels einer Sensorzeile darstellen, von der jeweils ein Abschnitt über ein geeignetes Fokussiersystem den drei Feldbereichen zugeordnet ist. Die beiden Signale der außenliegenden Ortungsbereiche werden als Referenzsignale für die obere und untere Normierungsgrenze des Signales des in der Mitte gelegenen Ortungsbereichs genutzt, wodurch eine immer gleichbleibende Empfindlichkeit, trotz schwankender Eingangssignaldifferenzen, gesichert ist.

Figur 3 zeigt eine Seitenansicht des Mähwerkes (MW) des Mähdreschers (1) im Bereich der Getreidekante (GK) und des Ortungsstrahlbereiches (OST3). Die zugehörige Teilortungsvorrichtung (OV3) ist zusammen mit den übrigen Teilortungsvorrichtungen auf einem Träger (OT) in eine Höhe (H) von etwa 1,5 m über dem Boden im vorderen Bereich des Mähwerkes angeordnet. Der Ortungsstrahlbereich (OST3) ist teils schräg auf den Boden und teils auf die Getreidekante (GK) gerichtet, so daß er um einen Vorausabstand (VA) von 3 bis 4 m den Boden erfaßt. Der Raumwinkel (OW) des Ortungsstrahlbereichs, der erfaßt wird, beträgt etwa 6° für 50% des Signalanteils und etwa 12° für 90% des Signalanteils. Der am Boden erfaßte Bereich hat einen Durchmesser (D) von ca. 1 m.

Der Aufbau der Regelvorrichtung mittels eines digitalen Rechners ermöglicht die völlige Integration des Lenksystems in die übrige digitale Steuerung des Mähdreschers. Durch einfache Parametrisierung und durch eine Bedienung von der zentralen Bedienungskonsole der Erntemaschine werden die Parameter dem Prozessor vorgegeben; die Regelvorrichtung selbst ist in ihrer Grundstruktur völlig neutral. Auch die unterschiedlichsten Ortungssysteme lassen sich durch einfache Parametrisierung und Normierung der Signale anschließen, und es ist keine spezielle hardwaremäßige Auslegung der Regelvorrichtung hierfür erforderlich.

## Patentansprüche

1. Ortungsvorrichtung, insbesondere eine Erntegutkanten-Ortungsvorrichtung, deren Ortungssignale (OS1 - OS3) einer Regelvorrichtung (ST) zugeführt sind, die mindestens ein Lenkhydraulikstellsignal (SHL, SHR) an eine elektrisch gesteuerte Lenkhydraulik (LH) von lenkbaren Rädern (HR) der Landmaschine (1) derart abgibt, daß eine jeweilige Ortungssignalabweichung von einem vorgegebenen Ortungskriterium, insbes. eines vorgegeben Abstandes (GKS) einer Erntegutkante (GK) zu einer Mähwerkkante, minimiert wird, dadurch gekennzeichnet, daß an der Landmaschine (1), insbes. einem Mähdrescher, drei Teilortungsvorrichtungen (OV1 - OV3) angeordnet sind, von denen eine erste auf das abgeerntete Feld, insbes. Stoppelfeld, eine zweite auf das nicht abgeerntete Feld, insbes. Getreidefeld (GF), und eine dritte auf die Erntegutkante (GK) gerichtet sind, und jeweils der Betrag der Differenz der Teilortungssignale (OS1, OS2) der ersten und zweiten Teilortungsvorrichtungen (OV1, OV2) normierend eine Bereichsgröße festlegen und jeweils der Mittelwert der beiden genannten Teilortungssignale (OS1, OS2) die Nullpunktlage für das Teilortungssignal (OS3) der dritten Teilortungsvorrichtung (OV3) ergibt und dieses so normiert als ein Ist-Signal der Regelvorrichtung (ST) dient.

2. Ortungsvorrichtung nach Anspruch 1, dadurch gekennzeichnet, daß die drei Teilortungsvorrichtungen (VO1 - VO3) aus drei Abschnitten einer, vorzugsweise optischen, Sensorzeile bestehen, von denen durch fokussierende Mittel jeweils einer raumwinkelmäßig das Stoppelfeld, einer das Getreidefeld (GF) und der dritte die Erntegutkante (GK) erfaßt.

3. Ortungsvorrichtung nach einem der vorstehenden Ansprüche, dadurch gekennzeichnet, daß die Teilortungsvorrichtungen (OV1 - OV3) der Landmaschine (1) um einen solchen Vorausabstand (VA) vorauseilend die Erntegutkante (GK) abtasten, so daß die Ortungssignalabweichung von einem als Ortungskriterium vorgegebenen Vergleichswert teils einen Erntegutkanten-Seitenversatz (GKS) und teils einen jeweils bestehenden Fahrtrichtungswinkel zur Erntegutkante (GK) repräsentiert.

4. Ortungsvorrichtung nach Anspruch 3, dadurch gekennzeichnet, daß der Vorausabstand (VA) etwa dem Abstand der lenkbaren Hinterräder (HR) von den Vorderrädern der Landmaschine (1) entspricht und von den Hinterrädern (HR) ein Radstellwinkelsignal (RWS) der Regelvorrichtung (ST) als weiteres IST-Signal zugeführt ist.

5. Ortungsvorrichtung nach Anspruch 4, dadurch gekennzeichnet, daß das normierte dritte Teilortungssignal (NOS) und das Radstellwinkelsignal (RWS) digitalisiert jeweils adressierend einem zweidimensionalen Kenndatenfeld (TB) zugeführt sind, das jeweils so eine Lenksteuergröße (LSG) liefert, aus der jeweils das rechts- oder linkslenkende Lenkhydraulikstellsignal (SHL, SHR) gebildet wird.

6. Ortungsvorrichtung nach einem der vorstehenden Ansprüche, dadurch gekennzeichnet, daß die Teilortungsvorrichtungen (OV1 - OV3) jeweils Fokussierungsmittel aufweisen, durch das sie einen Raumwinkel mit einer Halbwertsbreite von etwa 6° erfassen.

7. Ortungsvorrichtung nach einem der Ansprüche 3 bis 6, dadurch gekennzeichnet, daß die Teilortungsvorrichtungen (OV1 - OV3) etwa über dem stoppelfeldseitigen Schneidwerkende in etwa 1,5 m Höhe angeordnet sind.

8. Ortungsvorrichtung nach einem der vorstehenden Ansprüche, dadurch gekennzeichnet, daß die erste Teilortungsvorrichtung (OV1) jeweils auf einen schwadenfreien Stoppelfeldbereich etwa 1,5 m neben der Erntegutkante (GK) zentriert ausgerichtet ist.

9. Ortungsvorrichtung nach einem der vorstehenden Ansprüche, dadurch gekennzeichnet, daß die zweite Teilortungsvorrichtung (OV2) etwa 1,5 m neben der Erntegutkante (GK) das Getreidefeld (GK) zentriert ausgerichtet erfaßt.

10. Ortungsvorrichtung nach einem der vorstehenden Ansprüche, dadurch gekennzeichnet, daß die Teilortungsvorrichtungen (OV1 - OV3) Infrarotsensoren, Ultraschallsender-Empfängeranordnungen oder Leuchtflecksensor-Empfängeranordnungen oder Mikrowellensender-Empängeranordnungen sind.

11. Ortungsvorrichtung nach Anspruch 10, dadurch gekennzeichnet, daß die Teilortungsvorrichtungen (OV1 - OV3) Infrarotsensoren im Wellenlängenbereich zwischen 8 und 14 Mikrometern sind.

12. Ortungsvorrichtung nach Anspruch 11, dadurch gekennzeichnet, daß die Infrarotsensoren jeweils aus kaskadierten, planaren Dünnschicht-Thermoelementen bestehen, die im Abbildungsbereich einer Infrarotlinse angeordnet sind.

13. Ortungsvorrichtung nach Anspruch 10, dadurch gekennzeichnet, daß die Teilortungsvorrichtungen (OV1 - OV3) aus mindestens einem Strahler, der moduliertes, in der Wellenlänge zwischen dem Stoppelfeld und dem Getreidefeld (GF) kontrastierendes Licht aussendet, und aus mit dafür geeigneten Filtern versehenen optischen Sensoren bestehen, deren Sensorsignale entsprechend demodulierend gefiltert ausgewertet werden.

14. Ortungsvorrichtung nach Anspruch 13, dadurch gekennzeichnet, daß der/die Strahler eine Natriumdampflampe ist.

## Claims

1. A locating apparatus, in particular a crop material edge locating apparatus, whose locating signals (OS1 - OS3) are fed to a regulating device (ST) which outputs at least one hydraulic steering control signal (SHL, SHR) to an electrically controlled hydraulic steering system (LH) of steerable wheels (HR) of an agricultural machine (1) in such a way that a respective locating signal deviation from a predetermined locating criterion, in particular that of a predetermined spacing (GKS) of a crop material edge (GK) relative to a cutter mechanism edge, is minimised, characterised in that arranged on the agricultural machine (1), in particular a combine harvester, are three partial locating devices (OV1 - OV3) of which a first is directed on to the harvested field, in particular the stubble field, a second is directed on to the field which has not been harvested, in particular the corn field (GF), and a third is directed on to the crop material edge (GK), and the respective amount of the difference of the partial locating signals (OS1, OS2) of the first and second partial locating devices (OV1, OV2) standardisingly establish a region magnitude and the respective mean value of the two said partial locating signals (OS1, OS2) gives the zero point position for the partial locating signal (OS3) of the third partial locating device (OV4) and said signal when so standardised serves as an actual signal of the regulating device (ST).

2. A locating apparatus according to claim 1 characterised in that the three partial locating devices (VO1 - VO3) comprise three portions of a, preferably optical, sensor line of which a respective one covers in terms of solid angle the stubble field, one the corn field (GF) and the third the crop material edge (GK), by virtue of focussing means.

3. A locating apparatus according to one of the preceding claims characterised in that the partial locating devices (OV1 - OV3) of the agricultural machine (1) sense the crop material edge (GK) in leading relationship by such a lead distance (VA) so that the locating signal deviation from a comparative value which is predetermined as a locating criterion partly represents a crop material edge side displacement (GKS) and in part a respectively applicable angle of direction of travel with respect to the crop material edge (GK).

4. A locating apparatus according to claim 3 characterised in that the lead distance (VA) approximately corresponds to the distance of the steerable rear wheels (HR) from the front wheels of the agricultural machine (1) and a wheel position angle signal (RWS) is fed from the rear wheels (HR) to the regulating device (ST) as a further actual signal.

5. A locating apparatus according to claim 4 characterised in that the standardised third partial locating signal (NOS) and the wheel position angle signal (RWS) are respectively fed in digitised form and in addressing mode to a two-dimensional characteristic field (TB) which respectively supplies a steering control parameter (LSG) from which the respective right-steering or left-steering hydraulic steering control signal (SHL, SHR) is formed.

6. A locating apparatus according to one of the preceding claims characterised in that the partial locating devices (OV1 - OV3) each have focussing means by virtue of which they cover a solid angle with a half-value width of about 6°.

7. A locating apparatus according to one of claims 3 to 6 characterised in that the partial locating devices (OV1 - OV3) are arranged approximately over the cutting mechanism end at the stubble field side at a height of about 1.5 mm.

8. A locating apparatus according to one of the preceding claims characterised in that the first partial locating device (OV1) is respectively directed in centred relationship on to a swathe-free stubble field region at about 1.5 m beside the crop material edge (GK).

9. A locating apparatus according to one of the preceding claims characterised in that the second partial locating device (OV2) covers the corn field (GK) in centred directed relationship at about 1.5 m beside the crop material edge (GK).

10. A locating apparatus according to one of the preceding claims characterised in that the partial locating devices (OV1 - OV3) are infra-red sensors, ultrasonic transmitter-receiver arrangements or light spot transmitter-receiver arrangements or microwave transmitter-receiver arrangements.

11. A locating apparatus according to claim 10 characterised in that the partial locating devices (OV1 - OV3) are infra-red sensors in the wavelength range of between 8 and 14 micrometers.

12. A locating apparatus according to claim 11 characterised in that the infra-red sensors respectively comprise cascaded planar thin-film thermoelectric elements arranged in the imaging region of an infra-red lens.

13. A locating apparatus according to claim 10 characterised in that the partial locating devices (OV1 - OV3) comprise at least one radiating device which emits modulated light contrasting in wavelength between the stubble field and the corn field (GF), and optical sensors which are provided with filters suitable therefor and the sensor signals of which are suitably evaluated in a demodulating filtered mode.

14. A locating apparatus according to claim 13 characterised in that the radiating device or devices is or are a sodium vapour lamp.

## Revendications

1. Dispositif de repérage, en particulier dispositif de repérage des bords de produit récolté dont les signaux de repérage (OS1-OS3) sont transmis à un dispositif de réglage qui délivre au moins un signal de réglage d'hydraulique de braquage (SHL, SHR) à une hydraulique de braquage (LH) de roues orientables (HR) de la machine agricole (1) de telle sorte qu'un écart de signal de repérage par rapport à un critère de repérage prédéfini, en particulier une distance (GKS) prédéterminée entre un bord de produit récolté (GK) et un bord de mécanisme de coupe, soit réduite au minimum, caractérisé par le fait que sur la machine agricole (1), en particulier sur une moissonneuse-batteuse, sont disposés trois dispositifs de repérage élémentaires (OV1-OV3) parmi lesquels un premier dispositif est dirigé sur le champ moissonné, en particulier sur le champ de 1s, un deuxième dispositif est dirigé sur le champ non moissonné, en particulier sur le champ de céréale (GF), et un troisième dispositif est dirigé sur le bord de produit récolté (GK) et que respectivement la valeur de la différence des signaux de repérage élémentaires (OS1, OS2) des premier et deuxième dispositifs de repérage élémentaires (OV1, OV2) définit comme référence une grandeur de plage et respectivement la moyenne des deux signaux de repérage élémentaires (OS1, OS2) mentionnés donne la position zéro pour le signal de repérage élémentaire (OS3) du troisième dispositif de repérage élémentaire (OV3) et que celui-ci, ainsi normé, sert de signal réel pour le dispositif de réglage (ST).

2. Dispositif de repérage selon la revendication 1, caractérisé par le fait que les trois dispositifs de repérage élémentaires (VO1-VO3) sont formés de trois segments d'une rangée de détecteurs, de préférence optiques, qui, grâce à des moyens de focalisation, palpent à l'intérieur d'un angle solide, l'un le champ de chaumes, l'autre le champ de céréale (GF) et le troisième le bord de produit récolté (GK).

3. Dispositif de repérage selon une des revendications précédentes, caractérisé par le fait que les dispositifs de repérage élémentaires (OV1-OV3) de la machine agricole (1) palpent de manière anticipée le bord de produit récolté (GK) avec une distance d'anticipation (VA) telle que l'écart de signal de repérage par rapport à une valeur de référence prédéfinie en tant que critère de repérage représente d'une part un décalage latéral du bord de produit récolté (GKS) et d'autre part un angle de direction de déplacement par rapport au bord de produit récolté (GK).

4. Dispositif de repérage selon la revendication 3, caractérisé par le fait que la distance d'anticipation (VA) correspond approximativement à la distance entre les roues arrières (HR) orientables et les roues avant de la machine agricole (1) et que les roues arrières (HR) envoient un signal d'angle de braquage de roue (RWS) au dispositif de commande (ST) en tant que signal réel supplémentaire.

5. Dispositif de repérage selon la revendication 4, caractérisé par le fait que le troisième signal de repérage élémentaire (NOS) normé et le signal d'angle de braquage de roue (RWS) sont transmis sous forme numérisée en adressage à un registre de données bi-dimensionnel (TB) qui fournit une grandeur de commande de braquage (LSG) sur la base de laquelle est formé le signal de réglage d'hydraulique de braquage (SHL, SHR) provoquant le braquage vers la droite ou vers la gauche.

6. Dispositif de repérage selon une des revendications précédentes, caractérisé par le fait que les dispositifs de repérage élémentaires (OV1-OV3) comportent chacun des moyens de focalisation grâce auxquels ils palpent un angle solide dont la largeur de lobe est d'environ 6°.

7. Dispositif de repérage selon une des revendications 3 à 6, caractérisé par le fait que les dispositifs de repérage élémentaires (OV1-OV3) sont disposés approximativement au-dessus de l'extrémité du mécanisme de coupe côté champ de chaumes, à une hauteur d'environ 1,5 m.

8. Dispositif de repérage selon une des revendications précédentes, caractérisé par le fait que le premier dispositif de repérage élémentaire (OV1) est dirigé centré sur une zone du champ de chaumes exempte de javelle, environ 1,5 m sur le côté du bord de produit récolté (GK).

9. Dispositif de repérage selon une des revendications précédentes, caractérisé par le fait que le deuxième dispositif de repérage élémentaire (OV2) palpe centré le champ de céréale, environ 1,5 m sur le côté du bord de produit récolté (GK).

10. Dispositif de repérage selon une des revendications précédentes, caractérisé par le fait que les dispositifs de repérage élémentaires (OV1-OV3) sont des détecteurs infrarouges, des systèmes émetteurs-récepteurs à ultrasons ou des systèmes détecteurs-récepteurs de spot lumineux ou des systèmes émetteurs-récepteurs à ondes micrométriques.

11. Dispositif de repérage selon la revendication 10, caractérisé par le fait que les dispositifs de repérage élémentaires (OV1-OV3) sont des détecteurs infrarouges travaillant dans le domaine de longueur d'onde compris dans une plage allant de 8 à 14 micrométres.

12. Dispositif de repérage selon la revendication 11, caractérisé par le fait que les détecteurs infrarouges se composent chaque fois de thermocouples en couche mince, planaires, montés en cascade, qui sont disposés dans la zone d'image d'une lentille infrarouge.

13. Dispositif de repérage selon la revendication 10, caractérisé par le fait que les dispositifs de repérage élémentaires (OV1-OV3) se composent d'au moins un émetteur qui émet de la lumière modulée, qui assure un contraste dans la longueur d'onde entre le champ de chaumes et le champ de céréale (GF) ainsi que de détecteurs optiques pourvus de filtres adaptés dont les signaux de détecteur sont démodulés par filtrage et exploités.

14. Dispositif de repérage selon la revendication 13, caractérisé par le fait que la/les source(s) émettrice(s) est/sont une/des lampe(s) à vapeur de sodium.
